# EUROPEAN PATENT SPECIFICATION

(11) **EP 0 541 641 B1**
(45) Date of publication and mention of the grant of the patent: **02.11.1995**
(21) Application number: 91913997.2
(22) Date of filing: 26.07.1991
(51) Int. Cl.: C10B 53/00, C10B 19/00

(54) **DESTRUCTION OF WASTE**
ABFALLVERNICHTUNG
DESTRUCTION DE DECHETS

(30) Priority: 27.07.1990 US 558706; 24.04.1991 GB 9108769
(43) Date of publication of application: 19.05.1993
(73) Proprietor: HOLLAND, Kenneth Michael, Romford, Essex (GB)
(72) Inventor: HOLLAND, Kenneth Michael, Romford, Essex (GB)
(74) Representative: Wain, Christopher Paul
(86) International application number: GB9101275
(87) International publication number: WO9202598

(56) References cited:
- WO-A-88/08871
- DE-A- 3 937 331
- US-A- 3 384 467

## Description

The present invention is concerned with an apparatus and method for carrying out the pyrolysis of waste.

The destruction of waste material produced in the medical field is a substantial problem, because of the increasing amount of "one-use" disposable materials (such as swabs, syringes, disposable gloves or the like) being used in this field. The problem clearly further extends to cover the increasing amounts of waste material produced in other fields, for example waste plastics material resulting from automobile bodies and packaging. Such waste material is generally disposed of either by incineration or by use of landfill; the former method is objectionable on environmental grounds because of the nature of some of the combustion gases produced, while the latter method is inefficient because of the large bulk of plastics material. Similarly, the destruction of materials such as polychlorinated biphenyls (PCB's) and non-biodegradable matter screened from sewage is also a substantial problem, as well as CFC's and biochemical waste.

PCT application WO88/08871 discloses a method of pyrolysis of plastics waste products by contact with microwave-heated pulverulent material.

We have now developed an improved method having several advantages over the method disclosed by WO88/08871 and an apparatus specifically designed to carry out the improved method; the method is suitable for pyrolysis of a wide range of waste materials not susceptible to microwave heating. The present method and apparatus are distinguished from those of WO 88/08871 by the use of means for feeding waste material to an upper part of the bed of pulverulent material retained in the retaining means such that, in use, the waste material will sink through the bed, said feeding means being inclined and arranged for said waste material to slide along said feeding means to an upper part of said bed.

The present invention comprises a method for the pyrolysis of waste material which is not itself susceptible to heating by microwave radiation, which method comprises the steps of:
a) providing, under an atmosphere wherein name generation is substantially prevented, a pulverulent material which comprises carbon in elemental form, or a material which is capable of being pyrolysed to elemental carbon by microwave irradiation, which pulverulent material is susceptible to heating by microwave irradiation, in retaining means substantially inert to microwave radiation so as to form a bed of pulverulent material in which excess pulverulent material is allowed to overflow from the retaining means;
b) feeding said waste material to said retaining means using inclined feeding means such that the waste material is caused to slide along the feeding means to an upper part of said bed and allowing said waste material to sink from said upper part of said bed to a lower part thereof;
c) heating the pulverulent material to at least 400°C in a reaction chamber surrounding the retaining means by means of microwave irradiation such that thermal energy is transferred from the pulverulent material to the waste material as the latter sinks through said bed, the time and intensity of said irradiation being controlled so as to cause substantial pyrolysis of said waste material; and
d) removing gases, evolved on pyrolysis of the waste material, from the chamber. When the method according to the invention is carried out in a substantially oxygen-free atmosphere, there would in general only be a danger of production of dioxin or other noxious products with certain feedstocks. In such cases, and also in cases where a small amount of oxygen is present (but without sufficient thereof to cause flame generation), it is preferred to ensure that the pulverulent material (and therefore the plastics or other waste) attains a temperature of at least 800°C, which is sufficiently high that the risk of evolution of dioxins or similar noxious products by the pyrolysed material is minimized or eliminated.

If the waste material being pyrolysed in the method according to the invention is relatively easily degraded (e.g. polyethylene or nylon), then temperatures from 400 to 800°C may be satisfactorily employed. When more thermally resistant plastics and halogenated plastics (such as PTFE or PVC) are employed, the temperature of the carbonaceous material may be at least 800°C.

The present invention further comprises apparatus suitable for carrying out the microwave pyrolysis of waste material which is not itself susceptible to heating by microwave radiation, which apparatus comprises:
(a) retaining means substantially inert to microwave radiation which is capable of retaining a bed of pulverulent material, and arranged to permit the pulverulent material to overflow from the retaining means;
(b) a reaction chamber arranged to surround the retaining means;
(c) means for feeding waste material to an upper part of the bed of pulverulent material retained in the retaining means such that, in use, the waste material will sink through the bed, said feeding means being inclined and arranged for said waste material to slide along said feeding means to an upper part of said bed;
(d) a microwave radiation source, the radiation source and retaining means being relatively positioned such that microwave radiation emitted by the source can cause heating of the pulverulent material and substantial pyrolysis of the waste material as the latter sinks through the bed of pulverulent material;
(e) means for controlling the atmosphere in said chamber such that flame generation is substantially prevented in the chamber; and
(f) means for removal of gases, evolved on pyrolysis of the waste material, from the chamber.

Typically the retaining means comprises an open-topped receptacle which is generally of a material such as stainless steel or a ceramic material which is preferably resistant to temperatures of at least about 800°C or the order of 1000°C.

The waste material is fed to an upper part of the bed of pulverulent material in order to maximise contact of the waste material with the pulverulent material as the former sinks through the bed of pulverulent material. The greater the extent of contact between the waste material and the pulverulent material, the more efficient is the energy transfer from the pulverulent material to the waste material and hence enhanced pyrolysis of the waste material can be achieved. The feeding means preferably comprises a conduit arranged to pass through a first opening in an upper section of the chamber wall and to further extend through the interior of the chamber such that a leading end portion of the conduit-is located above the open end of the receptacle. Typically part of the conduit rests on an upper edge portion of the receptacle wall.

The feeding means is arranged to be inclined so that the waste material can easily slide along the feeding means into the retaining means. Typically the inclined feeding means is orientated in such a way that the waste material can be fed in substantially continuous manner to the retaining means; in alternative embodiments the waste material may be supplied semi-continuously or intermittently (in a batch process, for example). The use of such an inclined feeding means minimises the need for mechanical feeding means to transfer the waste material to the retaining means.

The waste material are supplied in such a manner that the pulverulent material is allowed to overflow from the receptacle as denser waste material sinks towards the bottom of the receptacle, displacing less dense carbonaceous material upwards as it does so. (The bulk specific gravity of finely divided elemental carbon is for example about 0.5 whereas waste material such as plastics normally has a bulk specific gravity of about 0.8 to 1.0). The pulverulent material overflowing from the static bed is preferably at least partly recycled thereto. The rate of feed depends largely on the power of the microwave discharge used during pyrolysis.

Typically the microwave radiation source is arranged remote from the chamber, a passage being arranged to extend from the microwave radiation source through a second opening provided in the chamber wall to a position adjacent the open end of the receptacle. The passage defines a pathway for the microwave radiation from its source to the retaining means.

The chamber is preferably provided with first and second outlets. The first outlet is provided through a lower section of the chamber wall and is typically located directly below the retaining means so as to be suitably positioned to receive any pulverulent material overflowing from the retaining means. Typically the first outlet leads to first cooling means for the pulverulent material, such that a substantially solid carbon product can be recovered therefrom. The means for removal of any gaseous products evolved during the pyrolysis generally comprises the second outlet which itself leads to gas cooling means before entering a liquid/gas separator which separates the evolved gas into oil products and waste gases. The second outlet is preferably arranged in an upper section of the chamber so as to be suitably located to collect any hot gases which rise from the waste material located in the retaining means during pyrolysis. The means for controlling the atmosphere such that flame generation is substantially prevented generally comprise first and second air locks, the first air lock being located at a position along the path of the feeding means and the second air lock being positioned downstream of the pulverulent material cooling means.

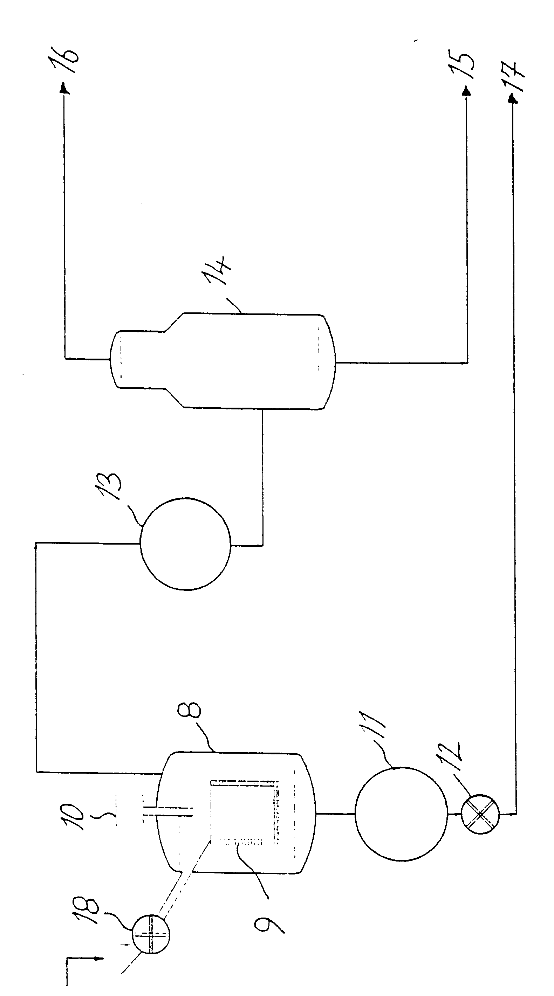

The invention will now be further illustrated, by way of example only, with reference to the accompanying drawing which is a schematic representation of apparatus according to the present invention.

Referring to the drawing, waste material and pulverulent carbonaceous material are supplied together to a refractory-lined stainless steel pyrolysis chamber 9, in a reactor 8, via an air lock 18. The material in the chamber is exposed to microwave irradiation from a microwave generator 10.

The pulverulent material (including waste material which has been pyrolysed to elemental carbon) overflows from the pyrolysis chamber 9 and passes through a carbon cooler 11 and air lock 12 before being recovered from the process as a solid carbon product 17. Hydrocarbon gases evolved during pyrolysis are passed out of the reactor 8, and through a hydrocarbon cooler 13 before entering a liquid gas separator 14 which separates the waste gas into oil products 15 and (acidic) waste gases 16. The waste gases may then be "scrubbed" before being released to the atmosphere.

## Claims

1. A method of pyrolysis of waste material which is not itself susceptible to heating by microwave radiation, which method comprises the steps of:
a) providing, under an atmosphere wherein flame generation is substantially prevented, a pulverulent material which comprises carbon in elemental form or a material which is capable of being pyrolysed to elemental carbon by microwave irradiation, which pulverulent material is susceptible to heating by microwave irradiation, in retaining means substantially inert to microwave radiation so as to form a bed of pulverulent material in which excess pulverulent material is allowed to overflow from the retaining means;
b) feeding said waste material to said retaining means using inclined feeding means such that the waste material is caused to slide along the feeding means to an upper part of said bed and allowing said waste material to sink from said upper part of said bed to a lower part thereof;
c) heating the pulverulent material to at least 400°C in a reaction chamber surrounding the retaining means by means of microwave irradiation such that thermal energy is transferred from the pulverulent material to the waste material as the latter sinks through said bed, the time and intensity of said irradiation being controlled so as to cause substantial pyrolysis of said waste material; and
d) removing gases, evolved on pyrolysis of the waste material, from the chamber.

2. A method according to claim 1, wherein said waste material is heated to at least 800°C in step (c).

3. Apparatus for the pyrolysis of waste material which is not itself susceptible to heating by microwave radiation which apparatus comprises:
(a) retaining means substantially inert to microwave radiation which is capable of retaining a bed of pulverulent material, and arranged to permit the pulverulent material to overflow from the retaining means;
(b) a reaction chamber arranged to surround the retaining means;
(c) means for feeding waste material to an upper part of the bed of pulverulent material retained in the retaining means such that, in use, the waste material will sink through the bed, said feeding means being inclined and arranged for said waste material to slide along said feeding means to an upper part of said bed;
(d) a microwave radiation source, the radiation source and retaining means being relatively positioned such that microwave radiation emitted by the source can cause heating of the pulverulent material and substantial pyrolysis of the waste material as the latter sinks through the bed of pulverulent material;
(e) means for controlling the atmosphere in said chamber such that flame generation is substantially prevented in the chamber; and
(f) means for removal of gases, evolved on pyrolysis of the waste material, from the chamber.

4. Apparatus according to claim 3, wherein said retaining means comprises an open-topped receptacle of a material which is resistant to temperatures of at least 800°C.

5. Apparatus according to claim 4, wherein said feeding means comprises a conduit arranged to pass through a first opening in an upper section of the chamber wall and to further extend through the interior of the chamber such that an end portion of the conduit is located above the open top of said receptacle.

6. Apparatus according to claim 5, wherein part of the conduit rests on an upper edge portion of a wall of the receptacle.

7. Apparatus according to any of claims 3 to 6, wherein the microwave radiation source is arranged remote from the chamber, with a passage arranged to extend from the microwave radiation source through a second opening provided in the chamber wall to a position adjacent the open end of the receptacle.

8. Apparatus according to any of claims 3 to 7, wherein the chamber has a first outlet provided through a lower section of the chamber wall and located below the retaining means so as to receive pulverulent material overflowing from the retaining means; and wherein said means for removal of gases comprises a second outlet which is arranged in an upper section of the chamber for collection of any hot gases rising from the waste material during pyrolysis.

## Patentansprüche

1. Eine Methode zur Pyrolyse von Abfallmaterial, das selbst nicht suszeptibel für Erhitzung durch Mikrowellenstrahlen ist. Diese Methode enthält die folgenden Schritte:
a)In einer Atmosphäre, in der Flammenbildung im wesentlichen verhindert wird, die Bereitstellung eines feinpulverigen Materials, das Kohlenstoff in elementarer Form enthält oder ein Material, das durch Mikrowellenbestrahlung zu elementarem Kohlenstoff pyrolisiert werden kann, in einer Haltevorrichtung, die sich Mikrowellenstrahlen gegenüber im wesentlichen inert verhält, so daß ein Bett von feinpulverigem Material gebildet wird, in dem überschüssiges feinpulveriges Material aus der Haltevorrichtung überfließen kann;
b)Die Zuführung besagten Abfallmaterials zu der besagten Haltevorrichtung unter Benutzung einer abgeschrägten Zuführung, so daß das Abfallmaterial die Führung entlang zum oberen Teil des besagten Bettes rutscht, und das besagte Abfallmaterial vom besagten oberen Teil des besagten Bettes zu einem tiefergelegeneren Teil des Bettes sinken kann;
c)Die Erhitzung, mittels Mikrowellenbestrahlung, des feinpulverigen Materials auf mindestens 400°C in einer die Haltevorrichtung umgebenden Reaktionskammer, so daß die thermische Energie vom feinpulverigen Material zum Abfallmaterial transferiert wird, während das letztere durch das besagte Bett hindurchsinkt. Die Dauer und Intensität der besagten Bestrahlung wird so gesteuert, daß eine weitgehende Pyrolyse des besagten Abfallmaterials verursacht wird und
d)Gase, die sich bei der Pyrolyse des Abfallmaterials entwickelt haben, aus der Kammer entfernt werden.

2. Eine Methode, gemäß Anspruch 1, bei der besagtes Abfallmaterial, in Schritt (c) auf mindestens 800°C erhitzt wird.

3. Apparat zur Pyrolyse von Abfallmaterial, das selbst nicht suszeptibel für Erhitzung durch Mikrowellenstrahlen ist. Der Apparat enthält:
(a)eine Haltevorrichtung, die Mikrowellenstrahlen gegenüber weitgehend inert ist, die in der Lage ist, ein Bett feinpulverigen Materials zu halten, und die so angelegt ist, daß das überschüssige feinpulverige Material aus der Haltevorrichtung überfließen kann;
(b)eine Reaktionskammer, die die Haltevorrichtung umgibt;
(c)eine Vorrichtung, die das Abfallmaterial zum oberen Teil des Bettes von feinpulverigem Material, das in der Haltevorrichtung gehalten wird, führt, und zwar dergestalt daß, bei Gebrauch, das Abfallmaterial durch das Bett hindurchsinken wird, da die besagte Zuführung abgeschrägt ist, und das Abfallmaterial diese Zuführung entlang zum oberen Teil des besagten Bettes rutschen wird;
(d)eine Mikrowellen-Strahlungsquelle, wobei die Strahlungsquelle und die Haltevorrichtung in einem solchen Verhältnis zueinander plaziert sind, daß die Quelle das feinpulverige Material erhitzen und im wesentlichen pyrolisieren kann, während es durch das Bett feinpulverigen Materials hindurchsinkt;
(e)eine Einrichtung zur atmosphärischen Kontrolle in besagter Kammer, so daß eine Flammenbildung in der Kammer im wesentlichen verhindert wird; und
(f)eine Vorrichtung, um Gase, die sich bei der Pyrolyse des Abfallmaterials entwickelt haben, aus der Kammer zu entfernen.

4. Ein Apparat, gemäß Anspruch 5, in dem besagte Haltevorrichtung aus einem nach oben offenen Behälter besteht, der aus Material gefertigt ist, das Temperaturen bis mindestens 800°C widersteht.

5. Ein Apparat, gemäß Anspruch 4, in dem besagte Zuführung einen Kanal enthält, der so angelegt ist, daß er durch eine erste Öffnung im oberen Teil der Kammerwand hindurch und dann weiter ins Innere der Kammer führt, und zwar dergestalt, daß ein Endabschnitt des Kanals über dem offenen Ende des Behälters plaziert ist.

6. Ein Apparat, gemaß Anspruch 5, in dem Teil des Kanals auf einem oberen Abschnitt der Behälterwand aufliegt.

7. Ein Apparat, gemäß eines jeden der Ansprüche 3 bis 6, in dem die Mikrowellen-Strahlungsquelle außerhalb der Kammer liegt, wobei sich ein Durchgang von der Mikrowellen-Stahlungsquelle durch eine zweite Öffnung in der Kammerwand zu einem Punkt neben dem offenen Ende des Behälters erstreckt.

8. Ein Apparat, gemäß eines jeden der Ansprüche 3 bis 7, in dem die Kammer einen ersten Ausgang besitzt, der durch einen unteren Abschnitt der Kammerwand erfolgt, und der unter der Haltevorrichtung liegt, um so aus der Haltevorrichtung überfließendes feinpulveriges Material aufzufangen; und in dem besagte Gasentfernungsvorrichtung einen zweiten Ausgang enthält, gelegen in einem oberen Abschnitt der Kammer, zur Auffangung aller heißen Gase, die vom Abfallmaterial während der Pyrolyse aufsteigen.

## Revendications

1. Une méthode de pyrolyse des déchets qui ne sont pas eux-mêmes susceptibles au chauffage par radiation aux micro-ondes, méthode qui comprend les phases suivantes:
a) fournir dans une atmosphère dans laquelle la production d'une flamme est effectivement évitée, un matériaux pulvérulents qui comprend du carbone sous sa forme d'élément, ou un matériau qui soit capable d'être pyrolysé en éléments de carbones par irradiation de micro-ondes; le matériaux pulvérulents étant susceptible au chauffage par irradiation de micro-ondes, dans un dispositif de retenue, effectivement inerte aux radiations micro-ondes de telle manière à former un lit de matériaux pulvérulents duquel le matériau pulvérulant en excès est libéré pour déborder du dispositif de retenue;
b) l'avancement desdits déchets vers le dispositif de retenue au moyen d'un plan incliné d'amenée, de telle manière que les déchets glissent le long du plan d'amenée vers une partie supérieure dudit lit, en permettant aux déchets de s'enfoncer et de passer de la partie supérieure du lit en question à la partie inférieure du même;
c) le chauffage des matériaux pulvérulents jusqu'à au moins 400°C dans une chambre de réaction entourant le dispositif de retenue, au moyen de radiation micro-ondes de telle sorte que l'énergie thermique soit transférée des matériaux pulvérulents aux déchets au fur et à mesure que ces derniers s'enfoncent dans le lit, la durée et l'intensité de ladite irradiation étant régulée de manière à provoquer la pyrolyse desdits déchets; et
d) l'évacuation des gaz, qui se sont dégagés de la chambre lors de la pyrolyse des déchets.

2. Une méthode selon la revendication 1, selon laquelle les déchets en question sont chauffés jusqu'à au moins 800°C, dans la phase c).

3. Un appareil pour la pyrolyse des déchets qui ne sont pas eux-mêmes susceptible au chauffage par radiation de micro-ondes, appareil qui comprend:
a) un dispositif de retenue effectivement inerte aux radiations de micro-ondes et qui est capable de retenir un lit de matériaux pulvérulents, et agencé de telle manière à permettre aux matériaux pulvérulents de déborder du dispositif de retenue;
b) une chambre à réaction agencée de manière à entourer le dispositif de retenue;
c) un moyen d'avancement des déchets vers la partie supérieur d'un lit de matériaux pulvérulents retenus dans ledit dispositif de retenue, de telle manière qu'au cours de l'emploi, les déchets s'enfoncent dans le lit, le dispositif d'avancement en question étant incliné et agencé de manière à ce que lesdits déchets glissent le long du dispositf d'avancement vers la partie supérieure du lit en question;
d) une source de radiation de micro-ondes, source de radistion et dispositif de retenue étant positionnés de manière à ce que les radiations de micro-ondes émises par la source puissent chauffer les matériaux pulvérulents et pyrolyser effectivement les déchets au fur et à mesure que ces derniers s'enfoncent dans le lit de matéraiux pulvérulents;
e) un moyen pour contrôler l'atmosphère dans la chambre en question de telle manière que la production de flamme soit effectivement évitée dans la chambre; et
f) un moyen pour évacuer les gaz dégagés dans la chambre lors de la pyrolyse des déchets.

4. Un appareil selon la revendication 3, grâce auquel ledit dispositif de retenue comprend un récipient ouvert dans le haut en un matériau résistant à des températures d'au moins 800°C.

5. Un appareil selon la revendication 4, dans lequel ledit moyen d'amenée comprend un conduit agencé de manière à passer par un premier orifice dans une section supérieure de lu paroi de la chambre et à se prolonger encore dans l'intérieur de la chambre de manière à ce que l'extrémité du conduit soit situé au dessus du haut ouvert dudit récipient.

6. Un appareil selon la revendication 5, dans lequel une partie du conduit repose sur l'arête supérieure d'une paroi du récipient.

7. Un appareil selon n'importe quelle revendication de 3 à 6 dans lequel la source de radiation de micro-ondes est située à distance de la chambre, avec un passage prévu pour se prolonger de la source de radiation de micro-ondes au second orifice prévu dans la paroi de la chambre à un endroit adjacent au haut ouvert du récipient.

8. Un appareil selon n'importe des revendications de 3 à 7 dans lequel la chambre a un premier orifice prévu dans la sectin inférieure de la paroi de la chambre et situé en dessous du dispositif de retenue de manière à recevoir les matériaux pulvérulents débordant du dispositif de retenue; et dans lequel ledit moyen d'évacuation des gaz comprend un second orifice qui est situé dans une section supérieure de la chambre pour récupérer les gaz chauds se dégageant des déchets pendant la pyrolyse.
